(19) **Europäisches Patentamt / European Patent Office / Office européen des brevets**

(11) **EP 3 898 547 B1**

(12) **FASCICULE DE BREVET EUROPEEN**

(45) Date de publication et mention de la délivrance du brevet:
**07.06.2023 Bulletin 2023/23**

(21) Numéro de dépôt: **19829561.0**

(22) Date de dépôt: **19.12.2019**

(51) Classification Internationale des Brevets (IPC):
**C03C 25/1095** (2018.01)   **C03C 25/146** (2018.01)
**C03C 25/24** (2018.01)   **D04H 1/4226** (2012.01)
**D04H 1/64** (2012.01)   **D04H 1/645** (2012.01)
**G01N 33/38** (2006.01)

(52) Classification Coopérative des Brevets (CPC):
**C03C 25/1095; C03C 25/146; C03C 25/24;
D04H 1/4226; D04H 1/641; D04H 1/643;
D04H 1/645**

(86) Numéro de dépôt international:
**PCT/EP2019/086377**

(87) Numéro de publication internationale:
**WO 2020/127784 (25.06.2020 Gazette 2020/26)**

(54) **PROCEDE D'AJUSTEMENT DE LA QUANTITE D'EAU DE DILUTION D'UNE COMPOSITION D'ENCOLLAGE, ET UNITE DE CALCUL CORRESPONDANTE**

VERFAHREN ZUR EINSTELLUNG DER VERDÜNNUNGSWASSERMENGE EINER LEIMUNGSZUSAMMENSETZUNG UND ENTSPRECHENDE BERECHNUNGSEINHEIT

METHOD FOR ADJUSTING THE AMOUNT OF DILUTION WATER OF A SIZING COMPOSITION, AND CORRESPONDING CALCULATING UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2018 FR 1873729**

(43) Date de publication de la demande:
**27.10.2021 Bulletin 2021/43**

(73) Titulaire: **SAINT-GOBAIN ISOVER
92400 Courbevoie (FR)**

(72) Inventeurs:
• **PLATON, Diana
60200 COMPIEGNE (FR)**
• **D'HERIN BYTNER, Frédéric
75010 PARIS (FR)**

(74) Mandataire: **Saint-Gobain Recherche
B.P. 135
39, quai Lucien Lefranc
93303 Aubervilliers Cedex (FR)**

(56) Documents cités:
**WO-A1-2012/078740     WO-A2-2006/023137**

**Description**

La présente invention concerne la fabrication de produits à base de fibres minérales, par exemple des fibres de verre, et en particulier de tels produits fabriqués à base d'un matelas de fibres liées par un liant.

L'invention concerne, plus spécifiquement, un procédé de fabrication d'un matelas de fibres minérales, et une installation de fabrication correspondante.

Des produits d'isolation commercialisés à l'heure actuelle sont typiquement constitués de panneaux, plaques, rouleaux ou produits de forme tubulaire ou autre obtenus à partir d'un matelas de fibres minérales telles que des fibres de verre, consolidé par un liant organique ou minéral.

Le procédé de fabrication d'un tel matelas de fibres est bien connu et comprend généralement la succession d'étapes suivantes :

- la fusion de la matière minérale dans un four verrier,
- la conformation en fibres,
- l'ajout d'une composition d'encollage sur les fibres,
- la collecte des fibres imprégnées de la composition d'encollage dans une chambre de réception comprenant, en dessous et dans l'axe du dispositif de fibrage, un convoyeur percé ou une grille, muni(e) dans sa partie inférieure d'une ou plusieurs gaines d'aspirations,
- le convoyage des fibres sur une surface de réception, sous forme de couche plus ou moins épaisse appelée matelas,
- généralement un traitement thermique de réticulation ou polymérisation de la composition d'encollage dans une étuve, ledit traitement thermique étant destiné à donner au matelas sa cohésion, et
- une préparation finale des produits résultants.

Dans le cadre du contrôle du procédé de fabrication tel qu'il vient d'être décrit, il est nécessaire d'effectuer en continu des procédures de contrôle, sur au moins une partie et de préférence sur la totalité de la production, pour garantir une bonne qualité du matelas.

La demande de brevet WO 2006/023137 décrit par exemple un procédé de contrôle du procédé basé sur une mesure par des moyens spectroscopiques de l'humidité présente dans le matelas de fibres imprégné de composition d'encollage, avant traitement thermique dans l'étuve. Par comparaison du taux d'humidité mesuré avec une valeur de référence, l'ajustement d'au moins un paramètre permet le contrôle en continu du procédé. Le procédé ne permet toutefois pas d'éviter les variations d'humidité du matelas, il ne fait que les corriger.

WO 2012/078740 A1 [OWENS CORNING INTELLECTUAL CAP [US]] 14.06.2012 décrit un procédé de fabrication d'un matelas de fibres minérales dans lequel le débit de pulvérisation de la solution d'encollage sur les fibres minérales dans la zone de formage est adaptée en fonction du niveau d'humidité ambiante mesuré à l'aide d'un capteur d'humidité situé dans ladite zone de formage.

Il est à noter que l'importance et la nécessité d'un procédé de contrôle efficace dans les procédés de fabrication des matelas de fibres minérales sont encore renforcées à l'heure actuelle en raison de la volonté de développer, en substitution aux résines formo-phénoliques utilisées aujourd'hui, des liants alternatifs biosourcés. Avec ces liants biosourcés encore plus qu'avec les liants formo-phénoliques, le contrôle et l'optimisation de la quantité d'eau et de sa répartition dans le produit non cuit est essentiel pour la maîtrise du procédé afin de garantir la qualité voulue sur le produit final.

En effet, pour diminuer la viscosité de ces liants alternatifs, il est nécessaire d'augmenter sensiblement, par rapport aux liants formo-phénoliques, la proportion d'eau présente dans la solution ajoutée aux fibres, ce qui entraîne des difficultés accrues au niveau de l'élimination de l'eau résiduelle potentiellement présente en sortie de ligne sur le produit fini, et rend ainsi plus indispensable encore la présence de moyens de contrôle précis.

L'invention a pour objectif de fournir un procédé de fabrication d'un matelas de fibres minérales permettant d'améliorer la qualité du traitement thermique du matelas en contrôlant plus efficacement la quantité d'eau à l'intérieur du produit non encore cuit. Cet objectif est atteint avec un procédé d'ajustement de la quantité d'eau de dilution d'une composition d'encollage destinée à être appliquée sur des fibres dans un poste de fibrage d'une installation de fabrication d'un matelas de fibres minérales, l'installation de fabrication comprenant

- une chambre de réception comprenant un dispositif de réception ajouré, notamment un convoyeur perforé ou une grille, muni d'une surface réceptrice de fibres et, sous ladite surface réceptrice, au moins une gaine d'aspiration,
- des moyens de traitement thermique du matelas,

le procédé comprenant au moins les étapes suivantes :

- on détermine l'humidité de l'air ambiant sur le poste de fibrage,

- on détermine l'humidité de l'air aspiré et le débit d'air aspiré dans la au moins une gaine d'aspiration, et
- on détermine une quantité optimale d'eau de dilution en fonction au moins de l'humidité de l'air ambiant sur le poste de fibrage, de l'humidité de l'air aspiré et du débit d'air aspiré dans la au moins une gaine d'aspiration, et de la quantité d'eau souhaitée dans le matelas en sortie de la chambre de réception,
- on ajuste la quantité d'eau de dilution en fonction de ladite quantité optimale ainsi déterminée.

Dans la présente demande, on définit l'air aspiré comme l'air effectivement aspiré par la ou les gaines d'aspiration, à travers le convoyeur perforé ou la grille de la chambre de réception.

On définit par ailleurs le poste de fibrage comme comprenant l'ensemble des dispositifs ou organes situés en amont du convoyeur perforé ou de la grille de la chambre de réception.

Enfin, on définit l'air induit comme la partie de l'air aspiré par les gaines d'aspiration, ne provenant pas des organes du poste de fibrage, qui comprennent notamment des organes de chauffage ou d'amenée d'air, d'eau ou autres produits (notamment le brûleur, les moyens d'application de la composition d'encollage, la couronne de soufflage, les pistolets à air, les éventuels dispositifs d'amenée de débris de produit recyclé, les éventuels dispositifs d'amenée d'air aspiré recyclé).

Dans la suite, une quantité pourra le plus souvent être interprétée comme un débit massique, le procédé de fabrication étant un processus continu (le matelas étant en déplacement).

Après étude détaillée du modèle thermodynamique du poste de fibrage jusqu'en amont de l'étuve, il a été établi que l'air induit est l'un des paramètres les plus déterminants du processus de fabrication du matelas de fibres décrit précédemment : la contribution en eau de cet air induit est, parmi toutes les contributions à l'humidité du matelas, le paramètre qui connaît les plus grandes variations. L'air induit est donc un paramètre dominant à maîtriser pour maintenir la cible d'humidité du matelas.

La quantité d'air induit est impossible à quantifier en tant que telle. La demanderesse a toutefois établi que l'air aspiré est généralement issu très majoritairement de l'air induit, souvent à plus de 80%. Le procédé objet de la présente invention utilise ce résultat, ainsi que la possibilité de mesurer la quantité d'air aspiré, en calculant ou approximant la quantité d'air induit. En connaissant l'humidité de l'air induit, il est possible de connaître son influence sur l'humidité du matelas. Si cette influence est trop forte, autrement dit si l'air induit est très chargé en eau, cette eau se retrouvera en partie dans le matelas, et il sera possible de diminuer la quantité d'eau contenue dans la composition d'encollage. Si au contraire l'air induit entraîne une évaporation trop importante, il sera nécessaire d'augmenter cette quantité.

La régulation de la quantité d'eau dans la composition d'encollage, en fonction de l'eau apportée par l'air induit, présente l'avantage d'être précise, et de ne nécessiter aucune modification majeure de l'installation de fabrication existante.

Elle peut être réalisée par l'ajustement simple d'un seul paramètre, et permet finalement d'améliorer le rendement produit en évitant les mises au rebut, et en limitant les opérations de réglages sur la ligne.

Le procédé selon l'invention est particulièrement adapté pour la fabrication d'un matelas de fibres de verre.

Le liant utilisé dans la composition d'encollage peut être n'importe quel liant organique couramment utilisé dans le domaine des produits d'isolation à base de laine de verre.

Il s'agit d'un liant thermodurci, insoluble et infusible, obtenu par polymérisation et/ou réticulation de monomères, oligomères ou polymères solubles ou dispersibles dans l'eau.

On peut citer à titre d'exemples de tels liants ceux

- à base de résines résol phénol-formaldéhyde, de préférence modifiées par de l'urée,
- à base de réactifs de Maillard (sucres réducteurs et amines),
- à base de polymères acryliques et d'agents de réticulation tels que des réactifs polyhydroxylés et polyaminés,
- à base de sucres non-réducteurs et/ou de sucres hydrogénés et de réactifs polycarboxylés, tels que l'acide citrique,
- à base d'aminoamides obtenus par réaction d'anhydrides carboxyliques et d'alkanolamines.

Le procédé est particulièrement adapté aux fibres minérales liées par un liant thermodurcissable/thermodurci, exempt de formaldéhyde et/ou à base de composés organiques biosourcés (aussi appelés « green binders » en anglais).

Il a été établi qu'une quantité d'eau cible pour le matelas est de préférence inférieure à 15% en masse, encore préférentiellement comprise entre 0,5 et 10% en masse, encore plus préférentiellement comprise entre 2 et 10% en masse. Cette quantité peut varier en fonction du type de liant utilisé dans le matelas. Par exemple, la quantité d'eau cible pour le matelas comprenant des liants organiques biosourcés est comprise entre 1 et 15% en masse, de préférence entre 2 et 10% en masse. Pour un matelas comprenant des liants de type résines formophénoliques, cette quantité d'eau cible est comprise entre 0,5 et 15% en masse et de préférence entre 1 à 5 % en masse. Pour un matelas comprenant un liant à base de polymère acrylique, la quantité d'eau cible est comprise entre 1 et 15% en masse, de préférence entre 2 et 10% en masse.

Un poste de fibrage comprend typiquement une pluralité d'organes de chauffage ou d'amenée d'air, d'eau ou autres produits, notamment au moins un brûleur et/ou des moyens d'application de la composition d'encollage et/ou au moins une couronne de soufflage et/ou des pistolets à air et/ou au moins un dispositif d'amenée de débris de produit recyclé, notamment de chutes de matelas, et/ou au moins un dispositif d'amenée d'air aspiré recyclé.

Les contributions à l'air aspiré que sont notamment

- l'air provenant de la ou des couronne(s) d'air,
- l'air provenant du ou des brûleur(s),
- l'air provenant des moyens d'application de la composition d'encollage,
- l'air provenant des pistolets à air,
- l'air provenant du ou des éventuels dispositifs d'introduction des débris de bordures, qui contiennent évidemment une certaine quantité d'eau, sont soit négligées soit prises en compte sous forme d'une constante dans la détermination de la quantité optimale d'eau de dilution. Ces contributions peuvent être mesurées ou calculées au préalable.

Dans certains cas particuliers dans lesquels une partie de l'air aspiré par la ou les gaines d'aspiration est recyclée pour être réintroduit au niveau du poste de fibrage, il pourra être nécessaire de prendre en compte, dans le calcul de la quantité d'eau de dilution, l'air provenant du ou des éventuels dispositifs d'amenée d'air aspiré recyclé. La quantité d'air aspiré recyclé peut en effet atteindre des valeurs allant jusqu'à 50% de la quantité d'air aspiré, rendant le paramètre non négligeable.

Selon un exemple, une quantité d'eau dite eau utile issue de l'un ou plusieurs des organes du poste de fibrage est prise en compte dans la détermination de la quantité optimale d'eau de dilution. Cette quantité d'eau utile peut être préalablement mesurée par essais ou déterminée par calcul.

Selon un exemple, la quantité d'eau utile est au moins égale à la somme de la quantité d'eau issue de l'au moins un brûleur et de la quantité d'eau issue de la composition de liant. Autrement dit, la quantité d'eau utile est approximée par une valeur au moins égale à cette somme.

Dans les cas où une partie de l'air aspiré par la ou les gaines d'aspiration est recyclée pour être réintroduite au niveau du poste de fibrage, la quantité d'eau utile pourra être au moins égale à la somme de la quantité d'eau issue de l'au moins un brûleur, la quantité d'eau issue de la composition de liant et la quantité d'eau issue de l'au moins un dispositif d'amenée d'air aspiré recyclé. Autrement dit, la quantité d'eau utile pourra être approximée par une valeur au moins égale à cette somme.

Selon un exemple, l'ajustement de la quantité d'eau dans la composition d'encollage est réalisé en continu au cours de la fabrication du matelas de fibres minérales. La dilution est ainsi adaptée en temps réel en fonction des conditions d'humidité ambiante, de sorte que les variations d'humidité dans le matelas sont très faibles voire complètement inexistantes, car évitées à la source.

Selon un autre exemple, l'ajustement de la quantité d'eau dans la composition d'encollage peut aussi être réalisé ponctuellement, par exemple toutes les heures, ou après chaque changement de produit.

Selon un exemple de mise en oeuvre, le débit d'air aspiré dans ladite au moins gaine d'aspiration est maintenu à une valeur constante.

Selon un autre exemple, le débit d'air aspiré est mesuré, et la valeur ainsi mesurée est prise en compte comme variable dans la détermination de la quantité optimale d'eau de dilution.

Le débit d'air aspiré dans la ou les gaines d'aspiration peut être obtenu en mesurant directement la vitesse de l'air à l'intérieur de la ou chaque gaine d'aspiration, ou un différentiel de pression directement lié à la vitesse de l'air.

On peut par exemple utiliser un système à tube(s) de pitot ou un annubar pour une mesure de pression, et un anémomètre ou tout autre système équivalent pour une mesure de vitesse.

Selon un exemple, pour déterminer l'humidité de l'air ambiant sur le poste de fibrage, on réalise des mesures d'humidité de l'air à différents endroits du poste de fibrage et on calcule une moyenne, éventuellement pondérée, des valeurs ainsi mesurées.

L'invention concerne également un procédé de fabrication d'un matelas de fibres minérales, dans lequel

- sur un poste de fibrage, on forme des fibres et on applique, sur lesdites fibres, une composition d'encollage issue du mélange d'une composition de liant avec de l'eau de dilution,
- on collecte les fibres imprégnées de la composition d'encollage dans une chambre de réception comprenant un dispositif de réception ajouré, notamment un convoyeur perforé ou une grille, muni d'une surface réceptrice de fibres et, sous ladite surface, au moins une gaine d'aspiration,
- on traite thermiquement le matelas,

le procédé étant caractérisé en ce qu'en outre :

- on détermine l'humidité de l'air ambiant sur le poste de fibrage,

- on détermine l'humidité de l'air aspiré et le débit d'air aspiré dans la au moins une gaine d'aspiration, et
- on détermine une quantité optimale d'eau de dilution en fonction au moins de l'humidité de l'air sur le poste de fibrage, de l'humidité de l'air aspiré et du débit d'air aspiré dans la au moins une gaine d'aspiration, et de la quantité d'eau cible souhaitée dans le matelas en sortie de la chambre de réception,
- on ajuste la quantité d'eau de dilution en fonction de ladite quantité optimale ainsi déterminée.

A noter que l'ensemble des caractéristiques mentionnées précédemment en lien avec le procédé de contrôle sont également applicables au procédé de fabrication.

L'invention concerne également une unité de calcul d'une quantité d'eau de dilution d'une composition d'encollage destinée à être appliquée sur des fibres dans un poste de fibrage d'une installation de fabrication d'un matelas de fibres minérales, l'installation de fabrication comprenant

- un poste de fibrage, comprenant des moyens de formation des fibres et des moyens d'application, sur lesdites fibres, d'une composition d'encollage issue du mélange d'une composition de liant avec de l'eau de dilution,
- une chambre de réception comprenant un dispositif de réception ajouré, notamment un convoyeur perforé ou une grille, muni d'une surface réceptrice de fibres et, sous ladite surface réceptrice, au moins une gaine d'aspiration,
- des moyens de traitement thermique du matelas,

l'unité de calcul comprenant en outre :

- des moyens de détermination de l'humidité de l'air ambiant sur le poste de fibrage
- des moyens de détermination de l'humidité de l'air aspiré et du débit d'air aspiré dans la au moins une gaine d'aspiration,
- des moyens de calcul de la quantité optimale d'eau de dilution en fonction de l'humidité de l'air ambiant sur le poste de fibrage, de l'humidité de l'air aspiré et du débit d'air aspiré dans la au moins une gaine d'aspiration, et de la quantité d'eau souhaitée dans le matelas en sortie de la chambre de réception, et
- des moyens d'ajustement de la quantité d'eau de dilution en fonction de ladite quantité optimale déterminée par les dits moyens de calcul.

L'invention concerne enfin une installation de fabrication d'un matelas de fibres minérales, comprenant

- un poste de fibrage, comprenant des moyens de formation des fibres et des moyens d'application, sur lesdites fibres, d'une composition d'encollage issue du mélange d'une composition de liant avec de l'eau de dilution,
- une chambre de réception comprenant un dispositif de réception ajouré, notamment un convoyeur perforé ou une grille, muni d'une surface réceptrice de fibres et, sous ladite surface réceptrice, au moins une gaine d'aspiration,
- des moyens de traitement thermique du matelas,

l'installation étant caractérisée en ce qu'elle comprend en outre :

- des moyens de détermination de l'humidité de l'air ambiant sur le poste de fibrage,
- des moyens de détermination de l'humidité de l'air aspiré et du débit d'air aspiré dans la au moins une gaine d'aspiration,
- des moyens de calcul de la quantité optimale d'eau de dilution en fonction de l'humidité de l'air ambiant sur le poste de fibrage, de l'humidité de l'air aspiré et du débit d'air aspiré dans la au moins une gaine d'aspiration, et de la quantité d'eau souhaitée dans le matelas en sortie de la chambre de réception, et
- des moyens d'ajustement de la quantité d'eau de dilution en fonction de ladite quantité optimale déterminée par les dits moyens de calcul.

Plusieurs modes ou exemples de réalisation sont décrits dans le présent exposé. Toutefois, sauf précision contraire, les caractéristiques décrites en relation avec un mode ou un exemple de réalisation quelconque peuvent être appliquées à un autre mode ou exemple de réalisation.

L'invention sera bien comprise et ses avantages apparaîtront mieux, à la lecture de la description détaillée qui suit, de plusieurs modes de réalisation représentés à titre d'exemples non limitatifs.

La description se réfère aux dessins annexés sur lesquels :

[Fig. 1] est une vue schématique d'une installation de fabrication d'un matelas de fibres minérales, selon un premier exemple de réalisation de l'invention,

[Fig 2A] est une vue en coupe selon II de la figure 1,

[Fig 2B] est une vue détaillée de la partie IIB de la figure 2A,

[Fig 3] est une vue schématique d'une installation de fabrication d'un matelas de fibres minérales, selon un deuxième exemple de réalisation de l'invention.

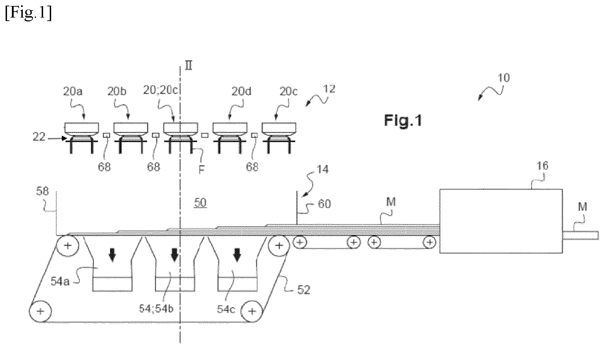

La figure 1 est une vue schématique d'une installation 10 de fabrication d'un matelas M de fibres de verre selon un premier exemple de réalisation, comprenant, dans l'ordre du processus de fabrication, un poste de fibrage 12, un poste de formage (en anglais « forming ») 14 et une étuve 16.

Le poste de fibrage 12 comprend au moins un dispositif de fibrage 20, de préférence une pluralité de tels dispositifs 20a, ..., 20n disposés en série, comme illustré sur la figure 1.

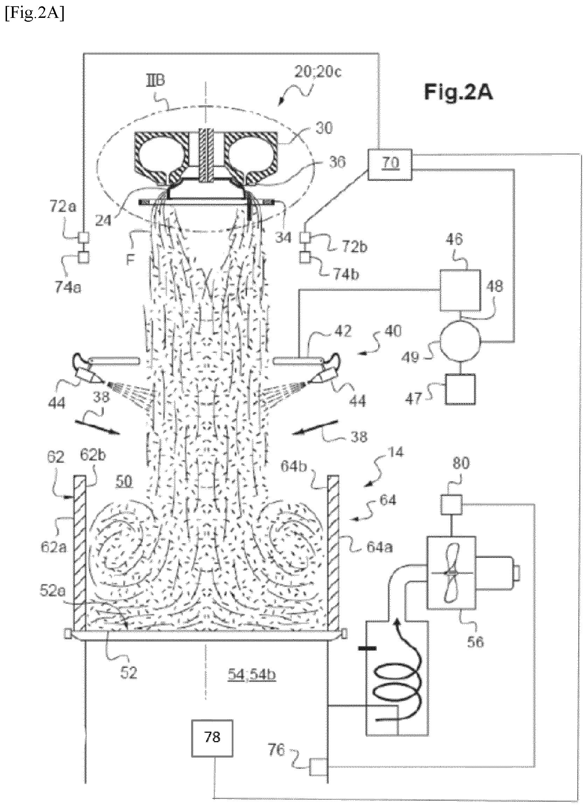

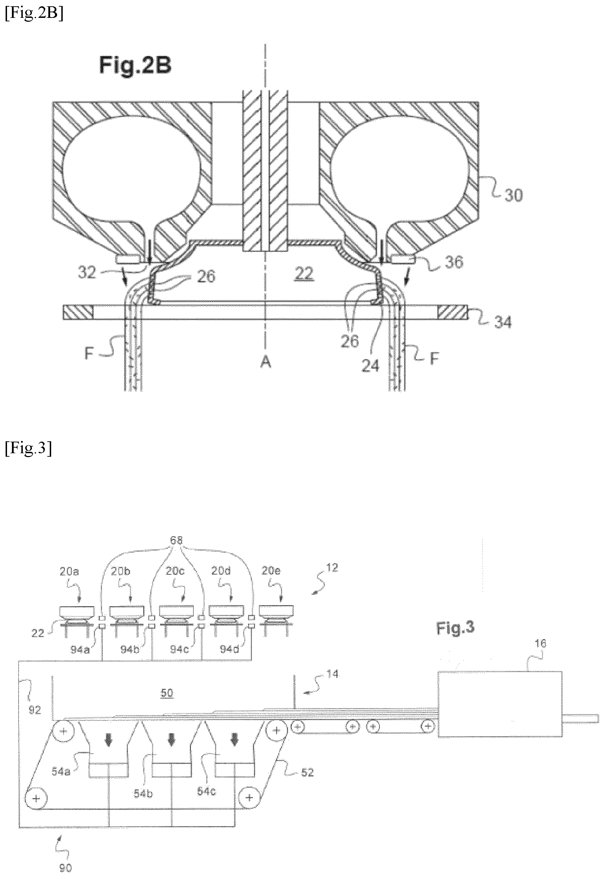

Un tel dispositif de fibrage 20 est illustré plus en détail sur les figures 2A et 2B.

Pour fabriquer les fibres, le dispositif 20 comprend un centrifugeur 22 - également nommé assiette de fibrage, apte à tourner à grande vitesse autour d'un axe A, notamment vertical, et comportant une paroi annulaire 24 percée d'une pluralité d'orifices 26 et éventuellement un fond. Un filet de verre fondu, introduit dans le centrifugeur 22, est projeté par la pluralité d'orifices 26 sous l'effet de la force centrifuge, créant une pluralité de filaments.

Chaque dispositif de fibrage 20 comprend également au moins un brûleur annulaire 30 générant un jet d'étirage gazeux 32 à haute température, sensiblement tangentiel à la paroi annulaire 24 du centrifugeur 22, destiné à chauffer et amincir lesdits filaments sortant du centrifugeur, les transformant ainsi en fibres F.

Optionnellement, le dispositif de fibrage 20 peut aussi comprendre un dispositif de chauffage de la partie inférieure du centrifugeur sous forme d'un anneau d'induction magnétique 34.

Chaque dispositif de fibrage 20 comprend en outre une couronne de soufflage ou couronne d'air 36 disposée sous le brûleur 30, et destinée à éviter une dispersion des fibres trop loin de l'axe de rotation A du centrifugeur 22.

Chaque dispositif de fibrage 20 comprend enfin un dispositif d'application 40 d'une composition d'encollage sur les fibres F. Ce dispositif d'application 40 se présente typiquement sous forme d'une couronne annulaire 42 porteuse de buses de pulvérisation 44 et à l'intérieur de laquelle passent successivement les fibres de verres F. La couronne 42 est reliée à un réservoir de composition d'encollage 46 et chaque buse de pulvérisation 44 associée à cette couronne est configurée pour recevoir d'une part une quantité de la composition d'encollage et d'autre part une quantité d'air comprimé via une alimentation indépendante (non représentée) pour projeter la composition d'encollage au passage des fibres de verres.

Dans le réservoir de composition d'encollage 46, une composition de liant est mélangée avec une quantité plus ou moins importante d'eau de dilution issue d'un réservoir d'eau 47 relié au réservoir de composition d'encollage 46 par un conduit d'amenée d'eau 48 pourvu de moyens d'ajustement, typiquement une valve de régulation 49.

La composition de liant est une solution aqueuse dont la teneur en matière solide (extrait sec) est constante, typiquement de l'ordre de 15% en masse. Sa matière sèche est constituée de précurseurs chimiques destinés à réagir par polymérisation dans le cadre d'un traitement thermique dans l'étuve 16.

La quantité d'eau de dilution, quant à elle, est un paramètre réglable grâce aux moyens d'ajustement 49, permettant ainsi de réguler la teneur en eau de la composition d'encollage finalement appliquée sur les fibres F.

De façon optionnelle, le dispositif de fibrage 20 peut en outre comprendre, en aval du dispositif d'application 40 de la composition d'encollage, des buses d'air 38 - aussi nommées pistolets à air - ici représentées schématiquement par des flèches, permettant de répartir les fibres F. La répartition des fibres F est ajustée le cas échéant en modifiant l'orientation des buses et la pression de l'air qui en est issu.

Les fibres de verres F de chaque dispositif de fibrage 20 tombent ainsi jusqu'à arriver au poste de formage 14. Là, elles sont collectées sous forme d'un matelas M dans une chambre de réception 50, sur un convoyeur perforé 52. Comme illustré sur les figures, une ou plusieurs gaines d'aspiration 54 (trois gaines respectivement 54a, 54b, 54c dans l'exemple représenté sur la figure 1) sont destinées à créer et maintenir une pression négative sous la surface réceptrice 52a du convoyeur 52 recevant le matelas M. Pour cela, chaque gaine d'aspiration 54 débouche, par son extrémité dite amont, sous la surface réceptrice 52a du convoyeur 52, et est liée à un ou plusieurs ventilateurs d'extraction 56 (visible sur la figure 2A) générant la force d'aspiration. L'air ainsi aspiré est appelé air du formage ou air aspiré.

La chambre de réception 50 est typiquement délimitée par quatre parois, orthogonales deux à deux : deux parois fixes avant et arrière 58, 60, transversales à la direction de transport du convoyeur, et deux parois latérales 62, 64 - aussi nommées bat-flancs - constituées de bandes sans fin mobiles, dont les parties extérieures 62a, 64a sont nettoyées en permanence par de l'eau. Les surfaces intérieures 62b, 64b des bat-flancs récupèrent la poussière et du liant à l'intérieur de la chambre de réception 50. Cette poussière est évacuée lors du nettoyage de ladite surface à l'extérieur lorsqu'ils passent à l'extérieur par rotation.

A noter que comme variante, les quatre parois de la chambre de réception peuvent être constituées de bandes sans fin mobiles telles que définies ci-dessus.

Le matelas M est ensuite dirigé en direction de l'étuve 16 formant poste de réticulation, dans laquelle il est simultanément asséché et soumis à un traitement thermique spécifique qui provoque la polymérisation (ou « durcissement ») de la résine du liant présent à la surface des fibres.

Le matelas M de fibres minérales subit ensuite

- une découpe longitudinale de ses bords non réguliers, dans le sens de la longueur, généralement au moyen de scies, et
- une découpe dans un sens transversal et éventuellement dans le sens de l'épaisseur (refente), de manière à obtenir des blocs qui pourront ensuite être disposés soit en plaques soit en rouleau, généralement au moyen d'une scie ou d'un massicot, pour former par exemple des panneaux ou rouleaux d'isolation thermique et/ou acoustique.

Dans certaines installations de fabrication, les bords non réguliers des panneaux sont récupérés, broyés, puis réintroduits en amont dans le procédé. Le poste de fibrage 12 peut alors, en complément de ce qui précède, comporter un ou plusieurs dispositifs d'amenée de débris de produit recyclé 68: chaque dispositif d'amenée de débris de produit recyclé 68 est situé par exemple entre deux dispositifs de fibrage 20, de préférence entre deux centrifugeurs 22, comme illustré sur la figure 3.

Selon l'invention, le procédé de fabrication comprend une étape de calcul de la quantité optimale d'eau de dilution en fonction de plusieurs paramètres mesurés à différents niveaux du process et -pour d'autres - calculés ou fixés préalablement.

Ce calcul est réalisé par une unité de calcul 70 de la quantité optimale d'eau de dilution, laquelle unité 70 est reliée à une pluralité de dispositifs de mesure décrits dans la suite, grâce auxquels sont déterminés :

- l'humidité de l'air ambiant sur le poste de fibrage,
- l'humidité de l'air aspiré dans la au moins une gaine d'aspiration, et
- le débit d'air aspiré dans la au moins une gaine d'aspiration.

En utilisant ces données mesurées, et d'autres paramètres du process calculés ou fixés préalablement, l'unité de calcul détermine la quantité optimale d'eau de dilution en utilisant une équation du type :
[Math1]

$$D_d = D_m + D_{aa} * (H_{aa} - H_{ai}) + C_a * H_{ai} - C_e \qquad (1)$$

où

$D_d$ est le débit massique d'eau à ajouter à la composition d'encollage (en kg/h)

$D_m$ est le débit massique d'eau cible souhaité dans le matelas en déplacement en sortie de la chambre de réception et en amont de l'étuve (en kg/h)

$D_{aa}$ est le débit massique d'air aspiré par la au moins une gaine d'aspiration (en kg/h) $H_{aa}$ est l'humidité absolue de l'air dans la au moins une gaine d'aspiration (kg d'eau/ kg d'air sec)

$H_{ai}$ est la moyenne d'humidité absolue de l'air dans le poste de fibrage (kg d'eau/ kg d'air sec)

$C_a$ est une valeur représentative de la quantité d'air issue des organes du poste de fibrage

$C_e$ est une valeur représentative de la quantité d'eau issue des organes du poste de fibrage.

L'humidité absolue de l'air ambiant sur le poste de fibrage 12 peut être obtenue par calcul à partir de l'humidité relative et de la température de l'air, mesurés à l'aide d'au moins un dispositif de mesure d'humidité relative 72 et au moins un dispositif de mesure de température 74, disposés dans une zone représentative des conditions générales d'hygrométrie et de température du poste de fibrage.

Comme l'hygrométrie et la température peuvent varier localement, l'installation comprend de préférence, au niveau du poste de fibrage 12, une pluralité de dispositifs de mesure de l'humidité relative 72a, ..., 72n, ainsi qu'une pluralité de dispositifs de mesure de température 74a, ..., 74n, disposés respectivement dans différentes zones dites zones test. L'ensemble de ces dispositifs de mesure d'humidité et de température sont reliés à l'unité de calcul de la quantité optimale d'eau de dilution 70, qui, sur la base des mesures ainsi obtenues, calcule une moyenne des valeurs d'humidité et de température, et en déduit une humidité absolue moyenne pouvant être utilisée dans l'équation précitée en tant que $H_{ai}$.

Les zones test sont par exemple déterminées au préalable en réalisant une cartographie de l'hygrométrie de l'air induit à l'aide de sondes hygrométriques réparties sur l'ensemble du poste de fibrage. Ces sondes permettent de détecter les courants d'air et les différences d'hygrométrie, et de définir ainsi les zones devant être prises en compte pour la détermination de l'humidité ambiante moyenne.

Le débit massique d'eau cible souhaité dans le matelas $D_m$ (en kg/h) est déterminé par essais et dépend des caractéristiques du matelas cuit demandées: il dépend notamment de la densité des fibres F, de la formule de la composition de liant, et de la quantité de liant.

Le débit massique d'air aspiré par la au moins une gaine d'aspiration $D_{aa}$ (en kg/h) est aisément mesurable et réglable.

Un dispositif de mesure du débit 76 à l'intérieur de la gaine 54b est ici représenté schématiquement sur la figure 2A. Avantageusement, lorsqu'une variation de débit est détectée par le dispositif de mesure 76, le dispositif de régulation 80 ajuste en conséquence la vitesse du ou des ventilateurs d'extraction 56 pour ramener le débit à sa valeur nominale/souhaitée. Le débit d'air aspiré dans ladite au moins gaine d'aspiration 54 est ainsi maintenu à une valeur constante.

Le dispositif de mesure 76 peut communiquer directement avec l'unité de calcul 70 de la quantité optimale d'eau de dilution (communication non représentée sur la figure 2A)

Selon un autre exemple de mise en oeuvre, le débit d'air aspiré peut être mesuré comme indiqué précédemment, et la valeur ainsi mesurée peut être prise en compte comme variable dans la détermination de la quantité optimale d'eau de dilution. Dans ce cas précis, une communication directe entre le dispositif de mesure 76 et l'unité de calcul 70 est particulièrement avantageuse.

L'humidité absolue de l'air $H_{aa}$ dans la au moins une gaine d'aspiration 54b est, elle, mesurée ou obtenue par tout moyen adapté (ou combinaison de moyens) prévu à l'intérieur de la gaine, référencé 78 sur la figure 2A, lui aussi en communication avec l'unité de calcul 70.

La valeur $C_e$ est de préférence approximée par une valeur au moins égale à la somme de la quantité d'eau issue du brûleur 30 et de la quantité d'eau issue de la composition de liant, qui sont calculables en connaissant respectivement le débit et la composition de l'air brûlé, et le débit de composition de liant défini par réglage et la teneur en eau de la composition de liant.

Encore plus préférentiellement, la valeur $C_e$ est approximée par une valeur égale à la somme de la quantité d'eau issue du brûleur 30 et de la composition de liant, mais aussi de la quantité d'eau issue de la couronne d'air 36 et/ou des pistolets d'air 38 et/ou du dispositif d'application 40 de la composition d'encollage et/ou du ou des éventuels dispositifs d'introduction des débris de bordures 68.

La valeur $C_a$ est de préférence approximée par une valeur au moins égale à la somme de la quantité d'air issue des pistolets à air 38 et du ou des éventuels dispositifs d'introduction des débris de bordures 68.

Encore plus préférentiellement, la valeur $C_a$ est approximée par une valeur égale à la somme de la quantité d'air issue des pistolets à air 38 et du ou des éventuels dispositifs d'introduction des débris de bordures 68, mais aussi de la quantité d'air issue du brûleur 30 et de la couronne d'air 36.

Une fois la quantité optimale d'eau de dilution calculée par l'unité de calcul 70, celle-ci est comparée à la quantité d'eau de dilution réelle à l'instant considéré, et, si besoin, l'unité de calcul 70 commande des moyens d'ajustement de la quantité d'eau de dilution pour que celle-ci atteigne ladite valeur optimale, ici la valve de régulation 49.

La figure 3 est une vue schématique d'une installation de fabrication d'un matelas de fibres minérales, selon un deuxième exemple de mise en oeuvre de l'invention.

Cette installation diffère de celle décrite en lien avec les figures 1 et 2 en ce qu'elle comprend un circuit 90 de recirculation d'une partie de l'air aspiré jusqu'au poste de fibrage 12, où cet air est réintroduit. Comme illustré sur la figure 3, un conduit de recirculation 92 relie chaque gaine d'aspiration 54a, 54b, 54c à des dispositifs d'amenée d'air aspiré recyclé 94a, ..., 94d disposés chacun entre deux dispositifs de fibrage 20.

Le débit d'air recyclé représente par exemple X= 20 à 70% du débit d'air aspiré.

La détermination de la quantité optimale d'eau de dilution est dans ce cas réalisée en utilisant une équation du type :

[Math2]

$$D_d = D_m + D_{aa} * (H_{aa} - H_{ai} - X * H_{ar}) + C_a * H_{ai} - C_e \qquad (2)$$

où

$D_d$ est le débit massique d'eau à ajouter à la composition d'encollage (en kg/h)

$D_m$ est le débit massique d'eau cible souhaité dans le matelas en déplacement en sortie de la chambre de réception et en amont de l'étuve (en kg/h) $D_{aa}$ est le débit massique d'air aspiré par la au moins une gaine d'aspiration (en kg/h) $H_{aa}$ est l'humidité absolue de l'air aspiré dans la au moins une gaine d'aspiration (kg d'eau/ kg d'air sec)

$H_{ai}$ est la moyenne d'humidité absolue de l'air dans le poste de fibrage (kg d'eau/ kg d'air sec)

$H_{ar}$ est l'humidité absolue de l'air recyclé (kg d'eau/ kg d'air sec)

X est le rapport débit massique d'air recyclé/ débit massique d'air aspiré

$C_a$ est une valeur représentative de la quantité d'air issue des organes du poste de fibrage

$C_e$ est une valeur représentative de la quantité d'eau issue des organes du poste de fibrage

On note que l'humidité absolue de l'air recyclé $H_{ar}$ peut être - ou non - égale à l'humidité absolue de l'air aspiré $H_{aa}$.

De préférence, l'hygrométrie de l'air recyclé à l'intérieur du conduit de recirculation 92 est mesurée au moyen d'au moins un dispositif de mesure de l'humidité relative et d'un dispositif de mesure de température (non représentés), reliés chacun à l'unité de calcul 70 de la quantité optimale d'eau de dilution.

**Revendications**

1. Procédé d'ajustement de la quantité d'eau de dilution d'une composition d'encollage destinée à être appliquée sur des fibres (F) dans un poste de fibrage (12) d'une installation (10) de fabrication d'un matelas (M) de fibres minérales, l'installation de fabrication (10) comprenant

   - un poste de fibrage (12), comprenant des moyens de formation des fibres (20) et des moyens d'application (40), sur lesdites fibres (F), d'une composition d'encollage issue du mélange d'une composition de liant avec de l'eau de dilution,
   - une chambre de réception (50) comprenant un dispositif de réception ajouré (52), notamment un convoyeur perforé ou une grille, muni d'une surface réceptrice de fibres et, sous ladite surface réceptrice, au moins une gaine d'aspiration (54),
   - des moyens de traitement thermique (16) du matelas (M),

   le procédé comprenant au moins les étapes suivantes :

   - on détermine l'humidité de l'air ambiant sur le poste de fibrage (12),
   - on détermine l'humidité de l'air aspiré et le débit d'air aspiré dans la au moins une gaine d'aspiration (54),
   - on détermine une quantité optimale d'eau de dilution en fonction au moins de l'humidité de l'air ambiant sur le poste de fibrage (12), de l'humidité de l'air aspiré et du débit d'air aspiré dans la au moins une gaine d'aspiration (54), et de la quantité d'eau souhaitée dans le matelas (M) en sortie de la chambre de réception (50), et
   - on ajuste la quantité d'eau de dilution en fonction de ladite quantité optimale ainsi déterminée.

2. Procédé selon la revendication 1, dans lequel le poste de fibrage (12) comprend une pluralité d'organes de chauffage ou d'amenée d'air, d'eau ou autres produits, notamment au moins un brûleur (30) et/ou des moyens d'application (40) de la composition d'encollage et/ou au moins une couronne de soufflage (36) et/ou des pistolets à air (38) et/ou au moins un dispositif d'amenée de débris de produit recyclé (68) et/ou au moins un dispositif d'amenée d'air aspiré recyclé (94a, ... 94d), et on détermine la quantité optimale d'eau de dilution en prenant en compte en outre la quantité d'eau dite eau utile issue de l'un ou plusieurs des dits organes, de préférence préalablement mesurée par essais ou déterminée par calcul.

3. Procédé selon la revendication 2, dans lequel la quantité d'eau utile est au moins égale à la somme de la quantité d'eau issue de l'au moins un brûleur (30) et de la quantité d'eau issue de la composition de liant.

4. Procédé selon la revendication 2, dans lequel la quantité d'eau utile est au moins égale à la somme de la quantité d'eau issue de l'au moins un brûleur (30), la quantité d'eau issue de la composition de liant et la quantité d'eau issue de l'au moins un dispositif d'amenée d'air aspiré recyclé (94a, ... 94d).

5. Procédé selon l'une quelconque des revendications 1 à 4, dans lequel le poste de fibrage comprend une pluralité d'organes de chauffage ou d'amenée d'air, d'eau ou autre produits, notamment au moins un brûleur (30) et/ou des moyens d'application (40) de la composition d'encollage et/ou au moins une couronne de soufflage (36) et/ou des pistolets à air (38) et/ou au moins un dispositif d'amenée de débris de produit recyclé (68) et/ou au moins un dispositif d'amenée d'air aspiré recyclé (94a, ...94d), et on détermine la quantité optimale d'eau de dilution en prenant en compte en outre une quantité d'air dit air utile issu de l'un ou plusieurs des dits organes, de préférence préalablement mesurée par essais ou déterminée par calcul.

6. Procédé selon l'une quelconque des revendications 1 à 5, dans lequel on maintient à valeur constante le débit d'air aspiré dans ladite au moins une gaine d'aspiration (54).

7. Procédé selon l'une quelconque des revendications 1 à 6, dans lequel, pour déterminer l'humidité de l'air ambiant sur le poste de fibrage (12), on réalise des mesures d'humidité de l'air à différents endroits du poste de fibrage (12) et on calcule une moyenne des valeurs ainsi mesurées.

8.  Procédé selon l'une quelconque des revendications 1 à 7, dans lequel l'ajustement de la quantité d'eau de dilution dans la composition d'encollage est réalisé en continu au cours de la fabrication du matelas (M) de fibres minérales.

9.  Procédé selon l'une quelconque des revendications 1 à 7, dans lequel l'ajustement de la quantité d'eau dans la composition d'encollage est réalisé ponctuellement, par exemple toutes les heures ou après chaque changement de produit.

10. Procédé de fabrication d'un matelas (M) de fibres minérales, dans lequel

    - sur un poste de fibrage (12), on forme des fibres (F) et on applique, sur lesdites fibres (F), une composition d'encollage issue du mélange d'une composition de liant avec de l'eau de dilution,
    - on collecte les fibres (F) imprégnées de la composition d'encollage dans une chambre de réception (50) comprenant un dispositif de réception ajouré (52), notamment un convoyeur perforé ou une grille, muni d'une surface réceptrice de fibres et, sous ladite surface, au moins une gaine d'aspiration (54),
    - on traite thermiquement le matelas,

    le procédé comprenant en outre un contrôle de la quantité d'eau de dilution d'une composition d'encollage selon le procédé de l'une quelconque des revendications 1 à 9.

11. Unité de calcul (70) d'une quantité d'eau de dilution d'une composition d'encollage destinée à être appliquée sur des fibres (F) dans un poste de fibrage (12) d'une installation (10) de fabrication d'un matelas (M) de fibres minérales, l'installation de fabrication (10) comprenant

    - un poste de fibrage (12), comprenant des moyens de formation (20) des fibres (F) et des moyens d'application (40), sur lesdites fibres (F), d'une composition d'encollage issue du mélange d'une composition de liant avec de l'eau de dilution,
    - une chambre de réception (50) comprenant un dispositif de réception ajouré (52), notamment un convoyeur perforé ou une grille, muni d'une surface réceptrice de fibres et, sous ladite surface réceptrice, au moins une gaine d'aspiration (54), et
    - des moyens de traitement thermique du matelas (16),

    l'unité de calcul comprenant en outre :

    - des moyens de détermination de l'humidité de l'air ambiant sur le poste de fibrage (72, 74),
    - des moyens de détermination de l'humidité de l'air aspiré (78) et du débit d'air aspiré (76) dans la au moins une gaine d'aspiration (54),
    - des moyens de calcul de la quantité optimale d'eau de dilution en fonction au moins de l'humidité de l'air ambiant sur le poste de fibrage (12), de l'humidité de l'air aspiré et du débit d'air aspiré dans la au moins une gaine d'aspiration (54), et de la quantité d'eau souhaitée dans le matelas (M) en sortie de la chambre de réception (50), et
    - des moyens d'ajustement de la quantité d'eau de dilution en fonction de ladite quantité optimale déterminée par les dits moyens de calcul.

12. Installation (10) de fabrication d'un matelas (M) de fibres minérales, comprenant

    - un poste de fibrage (12), comprenant des moyens de formation des fibres (20) et des moyens d'application (40), sur lesdites fibres, d'une composition d'encollage issue du mélange d'une composition de liant avec de l'eau de dilution,
    - une chambre de réception (50) comprenant un dispositif de réception ajouré (52), notamment un convoyeur perforé ou une grille, muni d'une surface réceptrice de fibres et, sous ladite surface réceptrice, au moins une gaine d'aspiration (54),
    - des moyens de traitement thermique du matelas (16),

    l'installation de fabrication étant **caractérisée en ce qu'**elle comprend en outre une unité de calcul (70) selon la revendication 11.

**Patentansprüche**

1. Verfahren zum Einstellen der Verdünnungswassermenge einer Leimungszusammensetzung, die dazu bestimmt ist, in einer Zerfaserungsstation (12) einer Anlage (10) zum Herstellen einer Matte (M) aus Mineralfasern auf Fasern (F) aufgebracht zu werden, wobei die Herstellungsanlage (10) umfasst

   - eine Zerfaserungsstation (12), umfassend Mittel zum Bilden von Fasern (20) und Mittel zum Aufbringen (40) einer Leimungszusammensetzung, die aus der Mischung einer Bindemittelzusammensetzung mit Verdünnungswasser stammt, auf die Fasern (F),
   - eine Aufnahmekammer (50), umfassend eine durchbrochene Aufnahmevorrichtung (52), insbesondere einen perforierten Förderer oder ein Gitter, versehen mit einer Aufnahmeoberfläche für Fasern, und unter der Aufnahmeoberfläche mindestens einen Ansaugkanal (54),
   - Mittel zur Wärmebehandlung (16) der Matte (M), wobei das Verfahren mindestens die folgenden Schritte umfasst:
   - die Feuchtigkeit der Umgebungsluft an der Zerfaserungsstation (12) wird bestimmt,
   - die Feuchtigkeit der angesaugten Luft und der Durchsatz der angesaugten Luft in dem mindestens einen Ansaugkanal (54) wird bestimmt,
   - eine optimale Verdünnungswassermenge mindestens in Abhängigkeit von der Feuchtigkeit der Umgebungsluft an der Zerfaserungsstation (12), der Feuchtigkeit der angesaugten Luft und dem Durchsatz der angesaugten Luft in dem mindestens einen Ansaugkanal (54) und der gewünschten Wassermenge in der Matte (M) am Ausgang der Aufnahmekammer (50) wird bestimmt und
   - die Verdünnungswassermenge in Abhängigkeit von der so bestimmten optimalen Menge wird eingestellt.

2. Verfahren nach Anspruch 1, wobei die Zerfaserungsstation (12) eine Vielzahl von Bauteilen zum Erwärmen oder Zuführen von Luft, Wasser oder anderen Produkten umfasst, insbesondere mindestens einen Brenner (30) und/oder Mittel zum Aufbringen (40) der Leimungszusammensetzung und/oder mindestens einen Blaskranz (36) und/oder Luftpistolen (38) und/oder mindestens eine Vorrichtung zum Zuführen von recycelten Produktabfällen (68) und/oder mindestens eine Vorrichtung zum Zuführen von recycelter angesaugter Luft (94a, .... 94d), und die optimale Verdünnungswassermenge bestimmt wird, indem ferner die als Nutzwasser bezeichnete Wassermenge, die aus einem oder mehreren dieser Bauteile stammt, berücksichtigt wird, vorzugsweise vorher durch Versuche gemessen oder durch Berechnung bestimmt.

3. Verfahren nach Anspruch 2, wobei die Nutzwassermenge mindestens gleich der Summe der Wassermenge, die aus dem mindestens einen Brenner (30) stammt, und der Wassermenge, die aus der Bindemittelzusammensetzung stammt, ist.

4. Verfahren nach Anspruch 2, wobei die Nutzwassermenge mindestens gleich der Summe der Wassermenge, die aus dem mindestens einen Brenner (30) stammt, der Wassermenge aus der Bindemittelzusammensetzung und der Wassermenge, die aus der mindestens einen Vorrichtung zum Zuführen von recycelter angesaugter Luft (94a, ...94d) stammt, ist.

5. Verfahren nach einem der Ansprüche 1 bis 4, wobei die Zerfaserungsstation eine Vielzahl von Bauteilen zum Erwärmen oder Zuführen von Luft, Wasser oder anderen Produkten umfasst, insbesondere mindestens einen Brenner (30) und/oder Mittel zum Aufbringen (40) der Leimungszusammensetzung und/oder mindestens einen Blaskranz (36) und/oder Luftpistolen (38) und/oder mindestens eine Vorrichtung zum Zuführen von recycelten Produktabfällen (68) und/oder mindestens eine Vorrichtung zum Zuführen von recycelter angesaugter Luft (94a, ...94d), und die optimale Verdünnungswassermenge bestimmt wird, indem ferner eine als Nutzluft bezeichnete Luftmenge aus einem oder mehreren der Bauteile berücksichtigt wird, vorzugsweise vorher durch Versuche gemessen oder durch Berechnung bestimmt.

6. Verfahren nach einem der Ansprüche 1 bis 5, wobei der Luftdurchsatz, der in den mindestens einen Ansaugkanal (54) gesaugt wird, auf einem konstanten Wert gehalten wird.

7. Verfahren nach einem der Ansprüche 1 bis 6, wobei zum Bestimmen der Feuchtigkeit der Umgebungsluft an der Zerfaserungsstation (12) Luftfeuchtigkeitsmessungen an verschiedenen Stellen der Zerfaserungsstation (12) durchgeführt werden und ein Mittelwert der so gemessenen Werte berechnet wird.

8. Verfahren nach einem der Ansprüche 1 bis 7, wobei das Einstellen der Verdünnungswassermenge in der Leimungszusammensetzung während des Herstellens der Matte (M) aus Mineralfasern kontinuierlich erfolgt.

9. Verfahren nach einem der Ansprüche 1 bis 7, wobei das Einstellen der Wassermenge in der Leimungszusammensetzung punktuell, zum Beispiel stündlich oder nach jedem Produktwechsel, erfolgt.

10. Verfahren zum Herstellen einer Matte (M) aus Mineralfasern, wobei

- in einer Zerfaserungsstation (12) Fasern (F) gebildet werden und auf die Fasern (F) eine Leimungszusammensetzung, die aus der Mischung einer Bindemittelzusammensetzung mit Verdünnungswasser stammt, aufgebracht wird,
- die mit der Leimungszusammensetzung imprägnierten Fasern (F) in einer Aufnahmekammer (50) gesammelt werden, umfassend eine durchbrochene Aufnahmevorrichtung (52), insbesondere einen perforierten Förderer oder ein Gitter, versehen mit einer Aufnahmeoberfläche für Fasern, und unter dieser Oberfläche mindestens einen Ansaugkanal (54) umfasst,
- die Matte wärmebehandelt wird,

wobei das Verfahren ferner eine Steuerung der Verdünnungswassermenge einer Leimungszusammensetzung gemäß dem Verfahren nach einem der Ansprüche 1 bis 9 umfasst.

11. Berechnungseinheit (70) für eine Verdünnungswassermenge einer Leimungszusammensetzung, die dazu bestimmt ist, auf Fasern (F) in einer Zerfaserungsstation (12) einer Anlage (10) zum Herstellen einer Matte (M) aus Mineralfasern aufgebracht zu werden, wobei die Herstellungsanlage (10) umfasst

- eine Zerfaserungsstation (12), umfassend Mittel (20) zum Bilden von Fasern (F) und Mittel (40) zum Aufbringen einer Leimungszusammensetzung, die aus der Mischung einer Bindemittelzusammensetzung mit Verdünnungswasser stammt, auf die Fasern (F),
- eine Aufnahmekammer (50), umfassend eine durchbrochene Aufnahmevorrichtung (52), insbesondere einen perforierten Förderer oder ein Gitter, versehen mit einer Aufnahmeoberfläche für Fasern, und unter der Aufnahmeoberfläche mindestens einen Ansaugkanal (54), und
- Mittel zur Wärmebehandlung der Matte (16),

wobei die Berechnungseinheit ferner umfasst:

- Mittel zum Bestimmen der Feuchtigkeit der Umgebungsluft an der Zerfaserungsstation (72, 74),
- Mittel zum Bestimmen der Feuchtigkeit der angesaugten Luft (78) und des Durchsatzes von angesaugter Luft (76) in dem mindestens einen Ansaugkanal (54),
- Mittel zum Berechnen der optimalen Verdünnungswassermenge mindestens in Abhängigkeit von der Feuchtigkeit der Umgebungsluft an der Zerfaserungsstation (12), der Feuchtigkeit der angesaugten Luft und dem Durchsatz der angesaugten Luft in dem mindestens einen Ansaugkanal (54) und der gewünschten Wassermenge in der Matte (M) am Ausgang der Aufnahmekammer (50) und
- Mittel zum Einstellen der Verdünnungswassermenge zum Verdünnen in Abhängigkeit von der durch die Berechnungsmittel bestimmten optimalen Menge.

12. Anlage (10) zum Herstellen einer Matte (M) aus Mineralfasern, umfassend

- eine Zerfaserungsstation (12), umfassend Mittel zum Bilden von Fasern (20) und Mittel zum Aufbringen (40) einer Leimungszusammensetzung, die aus der Mischung einer Bindemittelzusammensetzung mit Verdünnungswasser stammt, auf die Fasern,
- eine Aufnahmekammer (50), umfassend eine durchbrochene Aufnahmevorrichtung (52), insbesondere einen perforierten Förderer oder ein Gitter, versehen mit einer Aufnahmeoberfläche für Fasern, und unter der Aufnahmeoberfläche mindestens einen Ansaugkanal (54),
- Mittel zur Wärmebehandlung der Matte (16),

wobei die Herstellungsanlage **dadurch gekennzeichnet ist, dass** sie ferner eine Berechnungseinheit (70) nach Anspruch 11 umfasst.

## Claims

1. A process for adjusting the amount of dilution water of a binding compound intended to be applied on fibers (F) in a fiberizing station (12) of a plant (10) for manufacturing a mat (M) of mineral fibers, the manufacturing plant (10) comprising

    - a fiberizing station (12), comprising means (20) for forming the fibers and means (40) for applying, on said fibers (F), a binding compound resulting from the mixture of a binder composition with dilution water,
    - a receiving chamber (50) comprising a perforated receiving device (52), in particular a perforated conveyor or a grid, equipped with a fiber-receiving surface and, below said receiving surface, at least one suction duct (54),
    - means (16) for heat treatment of the mat (M),

    the process comprising at least the following steps:

    - determining the humidity of the ambient air in the fiberizing station (12),
    - determining the humidity of the intake air and the intake air flow rate in the at least one suction duct (54),
    - determining an optimal amount of dilution water as a function at least of the humidity of the ambient air in the fiberizing station (12), of the humidity of the intake air and of the intake air flow rate in the at least one suction duct (54), and of the desired amount of water in the mat (M) at the outlet of the receiving chamber (50), and
    - adjusting the amount of dilution water as a function of said optimal amount thus determined.

2. The process as claimed in claim 1, wherein the fiberizing station (12) comprises a plurality of members for heating or supplying air, water or other products, in particular at least one burner (30) and/or means (40) for applying the binding compound and/or at least one blowing ring (36) and/or air guns (38) and/or at least one device (68) for supplying fragments of recycled product and/or at least one device (94a, ..., 94d) for supplying recycled intake air, and the optimal amount of dilution water is determined by further taking into account the amount of water, referred to as usable water, resulting from one or more of said members, preferably measured beforehand by tests or determined by computation.

3. The process as claimed in claim 2, wherein the amount of usable water is at least equal to the sum of the amount of water resulting from the at least one burner (30) and of the amount of water resulting from the binder composition.

4. The process as claimed in claim 2, wherein the amount of usable water is at least equal to the sum of the amount of water resulting from the at least one burner (30), the amount of water resulting from the binder composition and the amount of water resulting from the at least one device (94a, ..., 94d) for supplying recycled intake air.

5. The process as claimed in any one of claims 1 to 4, wherein the fiberizing station comprises a plurality of members for heating or supplying air, water or other products, in particular at least one burner (30) and/or means (40) for applying the binding compound and/or at least one blowing ring (36) and/or air guns (38) and/or at least one device (68) for supplying fragments of recycled product and/or at least one device (94a, ..., 94d) for supplying recycled intake air, and the optimal amount of dilution water is determined by further taking into account an amount of air, referred to as usable air, resulting from one or more of said members, preferably measured beforehand by tests or determined by computation.

6. The process as claimed in any one of claims 1 to 5, wherein the intake air flow rate in said at least one suction duct (54) is maintained at a constant value.

7. The process as claimed in any one of claims 1 to 6, wherein, in order to determine the humidity of the ambient air in the fiberizing station (12), measurements of humidity of the air are carried out at various locations of the fiberizing station (12) and an average of the values thus measured is computed.

8. The process as claimed in any one of claims 1 to 7, wherein the adjustment of the amount of dilution water in the binding compound is carried out continuously during the manufacture of the mat (M) of mineral fibers.

9. The process as claimed in any one of claims 1 to 7, wherein the adjustment of the amount of water in the binding compound is carried out periodically, for example every hour, or after each change of product.

10. A process for manufacturing a mat (M) of mineral fibers, wherein

- in a fiberizing station (12), fibers (F) are formed and a binding compound resulting from the mixture of a binder composition with dilution water is applied on said fibers (F),
- the fibers (F) impregnated with the binding compound are collected in a receiving chamber (50) comprising a perforated receiving device (52), in particular a perforated conveyor or a grid, equipped with a fiber-receiving surface and, below said surface, at least one suction duct (54),
- the mat is heat treated,

the process further comprising a monitoring of the amount of dilution water of a binding compound as claimed in the process of any one of claims 1 to 9.

11. A unit (70) for computing an amount of dilution water of a binding compound intended to be applied on fibers (F) in a fiberizing station (12) of a plant (10) for manufacturing a mat (M) of mineral fibers, the manufacturing plant (10) comprising

- a fiberizing station (12), comprising means (20) for forming the fibers (F) and means (40) for applying, on said fibers (F), a binding compound resulting from the mixture of a binder composition with dilution water,
- a receiving chamber (50) comprising a perforated receiving device (52), in particular a perforated conveyor or a grid, equipped with a fiber-receiving surface and, below said receiving surface, at least one suction duct (54), and
- means (16) for heat treatment of the mat,

the computing unit further comprising:

- means (72, 74) for determining the humidity of the ambient air in the fiberizing station,
- means (78) for determining the humidity of the intake air and means (76) for determining the intake air flow rate in the at least one suction duct (54),
- means for computing the optimal amount of dilution water as a function at least of the humidity of the ambient air in the fiberizing station (12), of the humidity of the intake air and of the intake air flow rate in the at least one suction duct (54), and of the desired amount of water in the mat (M) at the outlet of the receiving chamber (50), and
- means for adjusting the amount of dilution water as a function of said optimal amount determined by said computing means.

12. A plant (10) for manufacturing a mat (M) of mineral fibers, comprising

- a fiberizing station (12), comprising means (20) for forming the fibers and means (40) for applying, on said fibers, a binding compound resulting from the mixture of a binder composition with dilution water,
- a receiving chamber (50) comprising a perforated receiving device (52), in particular a perforated conveyor or a grid, equipped with a fiber-receiving surface and, below said receiving surface, at least one suction duct (54),
- means (16) for heat treatment of the mat,

the manufacturing plant being **characterized in that** it further comprises a computing unit (70) as claimed in claim 11.

[Fig.1]

Fig.1

[Fig.2A]

Fig.2A

[Fig.2B]

**Fig.2B**

[Fig.3]

Fig.3

**RÉFÉRENCES CITÉES DANS LA DESCRIPTION**

**Documents brevets cités dans la description**

- WO 2006023137 A
- WO 2012078740 A1